(19) Europäisches Patentamt
European Patent Office
Office européen des brevets

(11) Veröffentlichungsnummer: **0 204 244**
**A2**

(12) **EUROPÄISCHE PATENTANMELDUNG**

(21) Anmeldenummer: **86107145.4**

(51) Int. Cl.4: **C09B 35/56**, D06P 1/39

(22) Anmeldetag: **27.05.86**

(30) Priorität: **07.06.85 DE 3520389**

(43) Veröffentlichungstag der Anmeldung:
**10.12.86 Patentblatt 86/50**

(84) Benannte Vertragsstaaten:
**CH DE FR GB LI**

(71) Anmelder: **BAYER AG**
**Konzernverwaltung RP Patentabteilung**
**D-5090 Leverkusen 1 Bayerwerk(DE)**

(72) Erfinder: **Kunde, Klaus, Dr.**
**Uppersberg 45**
**D-5090 Leverkusen(DE)**

(54) **Tetrakis-azofarbstoffe.**

(57) Tetrakis-azofarbstoffe, die in Form der freien Säuren der allgemeinen Formel

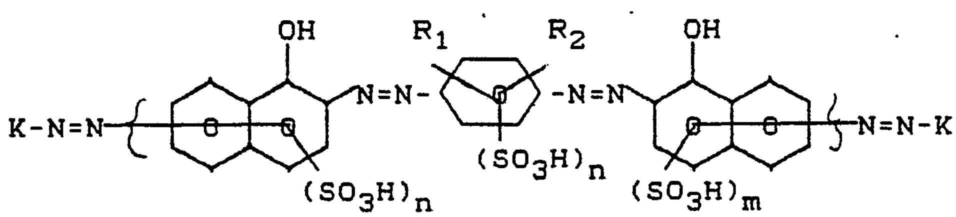

(I)

entsprechen, worin die Substituenten die in der Beschreibung angegebene Bedeutung haben, eignen sich hervorragend zum Färben und Bedrucken von Cellulosehaltiger Materialien und Leder und liefern Färbungen mit guten Eigenschaften.

EP 0 204 244 A2

# Tetrakis-azofarbstoffe

Die Erfindung betrifft neue Farbstoffe , die in Form der freien Säure der allgemeinen Formel

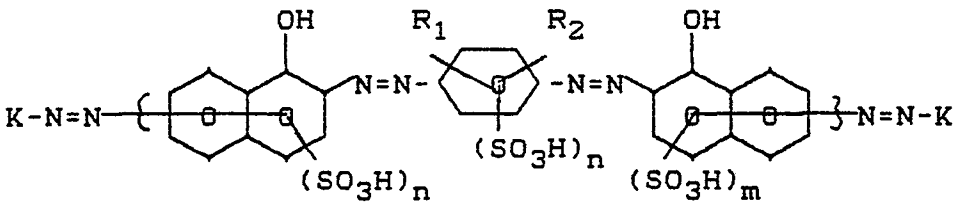
(I)

entsprechen, worin

K = Rest einer phenolischen oder enolischen Kupplungskomponente

$R_1$ und $R_2$ = H, Cl, $CH_3$, $OCH_3$, COOH,

n, m und p = 0 -2,

Verfahren zu ihrer Herstellung und ihre Verwendung zum Färben und Bedrucken von cellulosehaltigen Materalien und Leder.

Die Herstellung der Farbstoffe erfolgt in der Weise, daß man Verbindungen der allgemeinen Formel

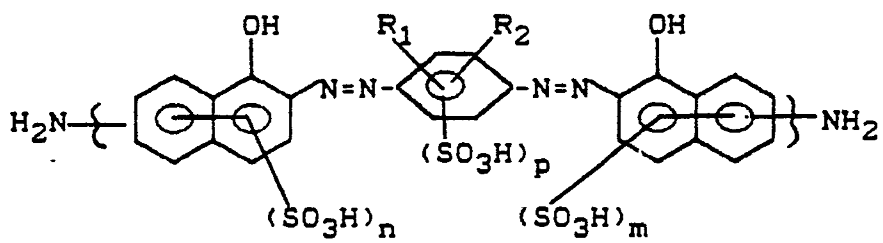
(II)

worin $R_1$, $R_2$, n, m und p die in Formel I angegebene Bedeutung besitzen,

in an sich bekannter Weise bisdiazotiert und mit Kupplungskomponenten K-H (IIa), vorzugsweise solchen, die höchstens einen $SO_3H$-Rest enthalten können, kuppelt und diese Kupplungsprodukte gegebenenfalls anschließend in ihre Lithium-, Natrium-, Kalium-, Ammonium; Alkylammonium- oder Alkanolammoniumsalze überführt.

Bevorzugt sind Farbstoffe der allgemeinen Formel

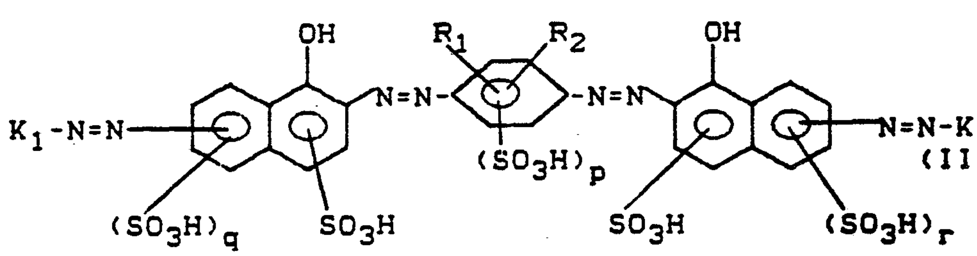
(III)

worin

$K_1$ = Rest einer Kupplungskomponente der Hydroxybenzol-, Aminobenzol-, Aminohydroxybenzol-, Hydroxynaphthalin-, Aminonaphthalin-, Pyrazolon-, Pyridin-, Pyrimidin- oder Acetessigarylidreihe mit jeweils höchstens einer Sulfogruppe,

q und r = 0 oder 1.

Besonders bevorzugt sind Farbstoffe der allgemeinen Formel

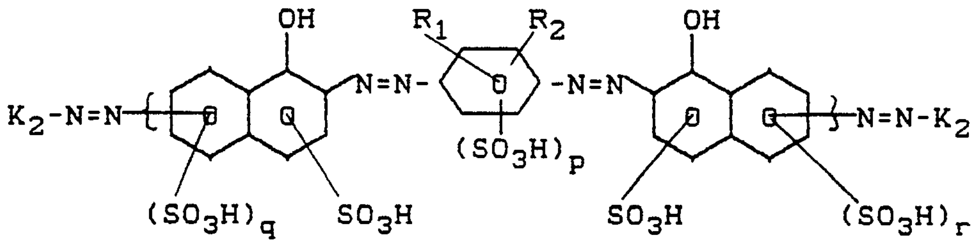

(IV)

worin

$K_2$ = Rest der Formel

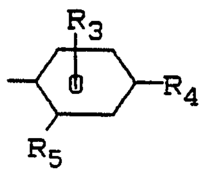

(V)

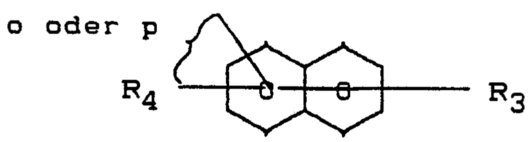

o oder p

(VI)

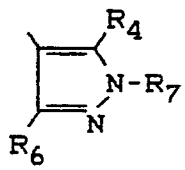

(VII)

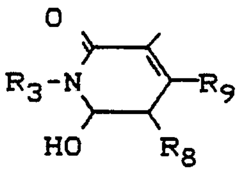

(VIII)

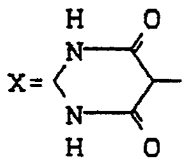

(IX)

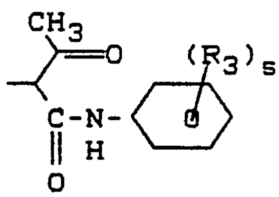

(X)

worin

$R_3$ = H, Cl, $CH_3$, $OCH_3$, COOH, $SO_3H$

$R_4$ = OH, $NH_2$,

$R_5$ = OH, $NH_2$, $NHCH_2COOH$, $NHCONH_2$, $NHCOCH_3$, $NHCOCH_2OH$

$R_6$ = H, $CH_3$, COOH, $COOCH_3$, $COOC_2H_5$,

$R_7$ = H, Phenyl, 2-, 3-oder 4-Sulfophenyl,

$R_8$ = H, CN, $CONH_2$, COOH, $SO_3H$,

$R_9$ = H, $CH_3$,

X = O, S. NH, NCN

s = 1 oder 2

$R_1$ = H, Cl, $CH_3$, $OCH_3$, COOH,

p = 0-2 und

q und r = 0 oder 1

und die Gesamtzahl der $SO_3H$-Reste 2-6 beträgt.

Von besonderer Bedeutung sind Farbstoffe der allgemeinen Formel

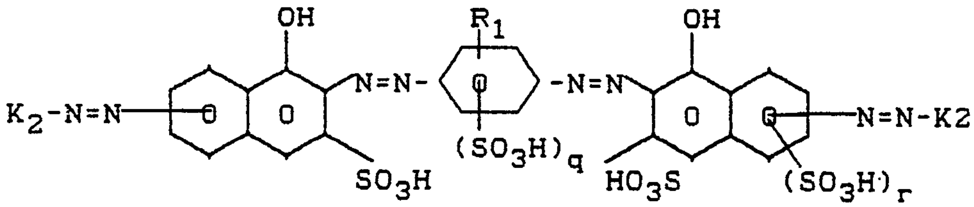 (XI)

worin

$K_2$ = Rest der Formel

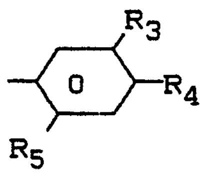 (XIII)

O oder p

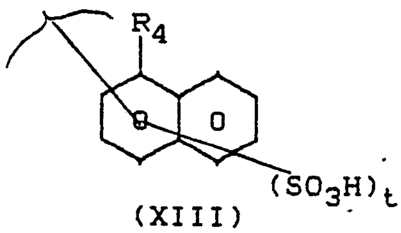

(XIII)

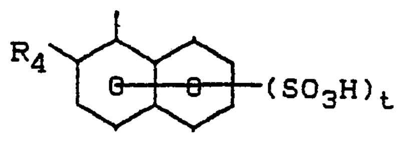

(XIV)

oder

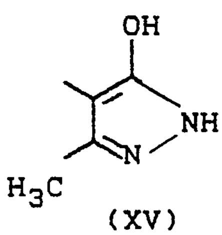 , 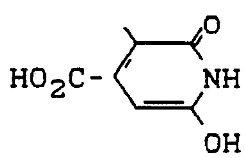 , 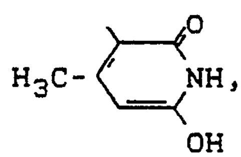 , 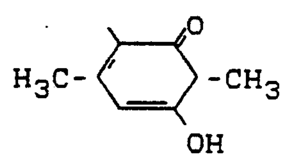

(XV) (XVI) (XVII) (XVIII)

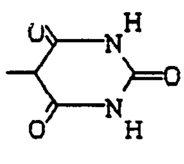 , 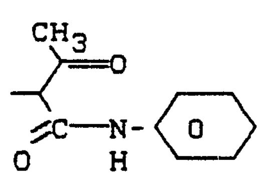 , 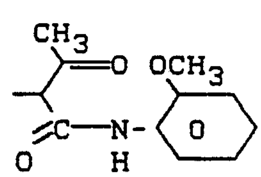

(XIX) (XX) (XXI)

worin t, q, r = 0 oder 1.

In den angegebenen Formeln besitzen die genannten Substituenten jeweils unabhängig voneinander die genannte Bedeutung.

Bevorzugt sind ganz generell diejenigen Farbstoffe mit 2-6, insbesondere 3-5 Sulfo-oder Carboxylgruppen, wobei die Reste der Kupplungskomponenten vorzugsweise jeweils höchstens eine Sulfo-oder Carboxygruppe enthalten.

Als Salze kommen insbesondere die Li-, Na-, K-und Ammoniumsalze -insbesondere die Alkyl-und Alkanolammoniumsalze in Betracht.

Im Rahmen der Ammoniumsalze sind diejenigen mit dem Kation der Formel

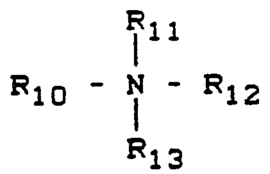

(XXII)

worin

$R_{10}$ = $C_1$-$C_4$-Hydroxyalkyl wie $CH_2CH_2OH$, $CH_2CHOHCH_3$, $C_3H_6OH$, $C_1$-$C_4$-Hydroxyalkoxy-$C_1$-$C_4$-Alkyl wie $CH_2CH_2OCH_2CH_2OH$,

$R_{11}$, $R_{12}$, $R_{13}$ = H, $C_1$-$C_4$-Alkyl, $C_1$-$C_4$-Hydroxyalkyl, insbesondere $CH_2CH_2OH$, $CH_2CHOHCH_3$, $C_1$-$C_4$-Hydroxyalkoxy-$C_1$-$C_4$-alkyl wie $C_2H_4OCH_2CH_2OH$ bevorzugt.

Als Ausgangsverbindungen der allgemeinen Formel II kommen z.B. Produkte in Frage, wie man sie in an sich bekannter Weise durch Bisdiazotieren von z.B. 1,4-Diaminobenzol, 2,5-Diaminotoluol, 2,5-Diaminochlorbenzol, 2,5-Diaminobenzolcarbonsäure, 2,5-Diaminoanisol, 2,5-Diaminobenzolsulfonsäure, 2,5-Diaminobenzol-1,4-disulfonsäure, 2,5-Diaminobenzol-1,6-disulfonsäure, 2,5-Diaminotoluol-4-sulfonsäure und Kuppeln mit äquimolaren Mengen 4-Hydroxy-6-aminonaphthalin-2-sulfonsäure, 4-Hydroxy-7-amino-naphthasulfonsäure, 4-Hydroxy-6-amino-naphthalin-1-sulfonsäure, 4-Hydroxy-7-aminonaphthalin-8-sulfonsäure, 4-Hydroxy-6-aminonaphthalin-2,6-disulfonsäure, 5-Hydroxy-2-aminonaphthalin-1,7-disulfonsäure, 8-Hydroxy-3-aminonaphthalin-1,5-disulfonsäure erhält oder durch Kuppeln von z.B. N-Acetyl-Derivaten der o.a. Naphthalinsulfonsäure mit Monodiazoniumsalzen der o.a. Diaminobenzole, Weiterdiazotieren der so erhaltenen Produkte und erneutes Kuppeln mit einer der o.a. Naphthalinsulfonsäuren; in den so erhaltenen Disazoverbindungen werden die N-Acetylgruppen anschließend abgespalten.

Geeignete Kupplungskomponenten K-H sind beispielsweise 1,3-Diaminobenzol, 2,4-Diaminotoluol, 2,4-Diaminochlorbenzol, 2,4-Diaminoanisol, 3-Aminophenol, Resorcin, 3-Aminophenylglycin, 3-Hydroxyphenylglycin, 3-Aminophenylharnstoff, 3-Hydroxyphenylharnstoff, N-(3-Aminophenyl)-glykolsäureamid, N-3-Aminophenylacetamid, N-3-Aminophenylmethansulfonsäureamid, 2,4-Diaminobenzolsulfonsäure, Salicylsäure.

1-Aminonaphthalin, 1-Hydroxynaphthalin, 2-Hydroxynaphthalin, 2-Aminonaphthalin-1-sulfonsäure, 4-Amino-naphthalin-1-sulfonsäure, 5-Aminonaphthalin-1-sulfonsäure, 6-Amino-naphthalin-1-sulfonsäure, 7-Aminonaphthalin-1-sulfonsäure, 5-Aminonaphthalin-2-sulfonsäure, 6-Aminonaphthalin-2-sulfonsäure, 7-Aminonaphthalin-2-sulfonsäure, 4-Aminonaphthalin-2-sulfonsäure, 3-Hydroxynaphthalin-1-sulfonsäure, 4-Hydroxynaphthalin-1-sulfonsäure, 5-Hydroxynaphthalin-1-sulfonsäure, 6-Hydroxynaphthalin-1-sulfonsäure, 7-Hydroxynaphthalin-2-sulfonsäure, 6-Hydroxynaphthalin-2-sulfonsäure, 5-Hydroxynaphthalin-2-sulfonsäure, 4-Hydroxynaphthalin-2-sulfonsäure, 7-Hydroxynaphthalin-1-sulfonsäure.

Weiterhin Pyrazolderivate, wie 3-Methylpyrazol-5-on, 1-Phenyl-3-methylpyrazol-5-on, 5-Amino-1-phenyl-3-methylpyrazol, 1-(2'-Sulfophenyl-)3-methylpyrazol-5-on, 1-(3'-Sulfophenyl-)3-methylpyrazol-5-on, 1-(4'-Sulfophenyl-)-3-methylpyrazol-5-on, 1-(4'-Sulfophenyl-)pyrazol-5-on-3-carbonsäure, 1-(4'-Sulfophenyl-)pyrazol-5-on-3-carbonsäuremethylester, 1-Phenylpyrazol-5-on-3-carbonsäure, 1-Phenylpyrazol-5-on-3-carbonsäuremethylester,

Pyridinderivate wie 2,6-Dihydroxy-4-methylpyridin, 2,6-Dihydroxy-4-methylnicotinonitril, 2,6-Dihydroxy-4-methylnicotinsäure, 2,6-Dihydroxy-4-methylnicotinsäureamid, 2,6-Dihydroxy-4-methylpyridin-3-sulfonsäure, 6-Hydroxy-1,4-dimethyl-1H-pyridin-2-on, 6-Hydroxy-1,4-dimethyl-2-oxo-1,2-dihydronicotinonitril, 6-Hydroxy-1,4-dimethyl-2-oxo-1,2-dimethyl-2-oxo-dihydronicotinsäureamid, 6-Hydroxy-1,4-dimethyl-2-oxo-1,2-dihydronicotinsäure, Citrazinsäure.

Pyrimidinderivate wie Barbitursäure, 2-Thiobarbitursäure, 2-Iminobarbitursäure, 2-Cyaniminobarbitursäure.

Acetessigsäurearylide wie Acetessigsäureanilid, Acetessigsäure-o-anisidid, Acetessigsäure-o-toluidid, Acetessigsäure-p-anisidid, 5-Acetoacetylamino-4-methoxybenzolsulfonsäure.

Die Weiterdiazotierungen und Schlußkupplungen erfolgen unter an sich bekannten Bedingungen, d.h. die Weiterdiazotierungen bei pH-Werten ≤ 2 und Temperaturen zwischen 0 und 40°C, die Schlußkupplungen bei pH-Werten zwischen 2 und 10 und Temperaturen zwischen 0 und 40°C.

Als Kupplungsbasen finden die üblichen Basen Verwendung, also z.B. Lithiumhydroxid, Lithiumcarbonat, Natriumhydroxid, Natriumcarbonat, Natriumhydrogencarbonat, Natriumacetat, Kaliumhydroxid, Kaliumcarbonat, Ammoniak, Ethanolamin, Diethanolamin, Triethanolamin, N-Methylethanolamin, N-Methyldiethanolamin, N,N-Dimethylethanolamin, N,N,N-Tris-[2-(2'-hydroxy)ethoxy-ethyl-]amin, 2-Hydroxypropylamin, N,N-Bis-(2-hydroxypropyl-)amin, 3-Hydroxypropylamin.

Die erfindungsgemäßen Farbstoffe werden in an sich bekannter Weise isoliert und getrocknet; in Form ihrer substituierten Ammoniumsalze können sie auch als konzentrierte, stabile Lösungen erhalten werden.

Die erfindungsgemäßen Farbstoffe eignen sich zum Färben und Bedrucken von Zellulose-haltigen Materialien, wie Baumwolle oder Papier, und Leder unter den für diese Materialien üblichen Bedingungen und nach dem üblichen Verfahren.

Man erhält Färbungen bzw. Drucke mit guten Gebrauchseigenschaften.

Beispiel 1

Zu einer Suspension von 65,2 g der Verbindung der Formel A in 500 ml Wasser gibt man 13,8 g $NaNO_2$; diese Mischung läßt man bei 20 - 25°C in eine Vorlage aus 100 ml 10 %iger Salzsäure einfließen. Man rührt eine Stunde nach, dann wird der Nitritüberschuß mit Amidosulfonsäure zerstört. 22 g 1,3-Diaminobenzol werden in 200 ml Wasser gelöst. Zu dieser Lösung gibt man die Suspension der Bisdiazoniumverbindung, anschließend wird der pH-Wert der Mischung durch Zugabe von 10 %iger Natronlauge auf ca. 7 gebracht. Nach Beendigung der Kupplung wird der Farbstoff abfiltriert und getrocknet. Er färbt Baumwolle und Papier in grünstichig schwarzen Tönen.

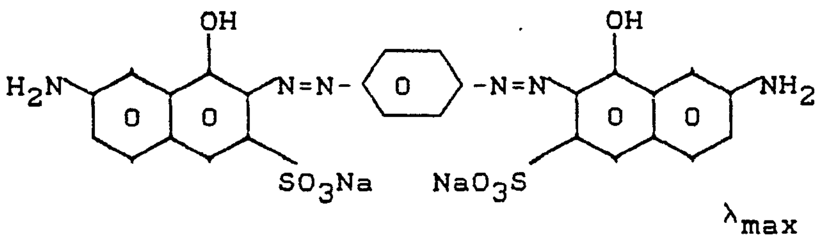

(A)

$\lambda_{max}$ = 662 nm

Beispiel 2

Ersetzt man das in Beispiel 1 verwendete 1,3-Diaminobenzol durch äquimolare Mengen der in der folgenden Tabelle angegebenen Kupplungskomponenten, so erhält man Farbstoffe, die Baumwolle, Papier und Leder in den angegebenen Tönen anfärben.

| Bsp. | Kupplungskomponente | Farbton | $\lambda_{max}$ |
|---|---|---|---|
| 2 | 3-Aminophenol | schwarzgrün | 458 nm |
| 3 | Resorcin | dunkelgrün | 612 nm |
| 4 | 4-Hydroxynaphthalin-1-sulfonsäure | marineblau | 622 nm |
| 5 | 6-Hydroxynaphthalin-2-sulfonsäure | blaugrau | 618 nm |
| 6 | 3-Methylpyrazol-5-on | dunkelgrün | 604 nm |

Beispiel 7

Die nach der Diazotierung der Verbindung der Formel A erhaltene Bisdiazoniumverbindung aus Beispiel 1, die vollständig auskristallisiert, wird abfiltriert; der Rückstand wird mit Wasser neutral gewaschen. 18,8 g 2,4-Diaminobenzolsulfonsäure werden mit Hilfe von Trisethanolamin in 300 ml Wasser bei 20° C gelöst, in diese Lösung wird die obige Bisdiazoniumverbindung eingetragen, wobei der pH-Wert der Suspension mit N,N,N-Trisethanolamin bei ca. 7 gehalten wird. Nach Beendigung der Kupplung wird die Mischung auf 50° C erwärmt und anschließend filtriert. Man erhält eine stabile Lösung des Farbstoffes, der Baumwolle, Papier und Leder in schwarzgrünen Tönen anfärbt.

Beispiel 8 -11

Ersetzt man die in Beispiel 7 verwendete 2,4-Diaminobenzolsulfonsäure durch eine äquimolare Menge der in der folgenden Tabelle angegebenen Kupplungskomponenten und verwendet man als Kupplungsbase Trisethanolamin ($B_1$), oder N-Methyldiethanolamin ($B_2$) oder N,N,N-Tris-[2-(2'-hydroxy ethoxy-)ethyl-]amin ($B_3$), so erhält man stabile Lösungen der Farbstoffe, die Baumwolle, Papier und Leder in den angegebenen Tönen anfärben.

| Bsp. | Base | Kupplungskomponente | Farbton | $\lambda_{max}$ |
|---|---|---|---|---|
| 8 | $B_2$ | 3-Aminophenylglycin | schwarz | 618 nm |
| 9 | $B_3$ | 3-Hydroxyphenylglycin | schwarzgrün | 608 nm |
| 10 | $B_1$ | 4-Aminonaphthalin-1-sulfonsäure | blaugrau | 614 nm |
| 1 | $B_2$ | Citrazinsäure | dunkelgrün | 608 nm |

Beispiel 12

26,4 g des Na-Salzes von 4-Hydroxynaphthalin-1-sulfonsäure werden in 200 ml Wasser gelöst und bei 20° C mit der Suspension der nach Beispiel 1 erhaltenen Bisdiazoniumverbindung versetzt, wobei der pH-Wert der Mischung mit Hilfe von 10 %iger Natronlauge bei 5,5-6 gehalten wird. Nach Beendigung der Kupplung wird eine Lösung von 5,5 g 1,3-Diaminobenzol in 100 ml Wasser zugegeben, dann wird der pH-Wert mit Hilfe von 10 %iger Natronlauge auf ca. 7 gebracht. Nach Beendigung der Kupplung wird der Farbstoff abfiltriert und getrocknet. Er färbt Baumwolle und Papier in schwarzen Tönen.

Beispiel 13 -15

Ersetzt man die in Beispiel 12 eingesetzte 1. Kupplungskomponente 4-Hydroxynaphthalin-1-sulfonsäure durch eine äquimolare Menge der in den folgenden Tabelle angegebenen Verbindungen und

die 2. Kupplungskomponente ebenfalls durch die in der Tabelle angegebenen Verbindungen, so erhält man Farbstoffe, die Baumwolle, Papier und Leder in den angegebenen Tönen anfärben.

| Bsp. | Kupplungs-komponente | Kupplungs-komponente | Farbton | $\lambda_{max}$ |
|---|---|---|---|---|
| 13 | 5-Hydroxynaphthalin-1-sulfon-säure | 3-Aminophenol | schwarz | 548 nm |
| 14 | 6-Hydroxynaphthalin-2-sulfon säure | 3-Aminophenyl-harnstoff | schwarz | 480 nm |
| 15 | 3-Hydroxynaphthalin-1-sulfon säure | N-(3-Aminophenyl-) glykolsäureamid | schwarz | 604 nm |

Beispiel 16

Verwendet man statt der in Beispiel 1 eingesetzten Verbindung der Formel A dieselbe Menge der Verbindung der Formel B und als Kupplungskomponente die in der folgenden Tabelle angegebenen Verbindungen, so erhält man Farbstoffe, die Baumwolle, Papier und Leder in den angegebenen Tönen anfärben.

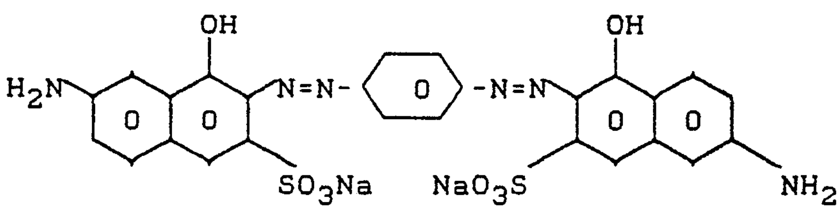

(B)

| Bsp. | Kupplungskomponente | Farbton | $\lambda_{max}$ |
|---|---|---|---|
| 16 | 1,3-Diaminobenzol | schwarz | 608 nm |
| 17 | Resorcin | grau | 596 nm |
| 18 | 4-Hydroxynaphthalin-2-sulfonsäure | dunkelblau | |
| 19 | 3-Hydroxyphenylglycin | blaugrau | 594 nm |
| 20 | N-(3-Aminophenyl-)acetamid | schwarz | 594 nm |
| 21 | Barbitursäure | dunkelgrün | 578 nm |

Beispiel 22 -24

Ersetzt man die in den Beispielen 7 -11 eingesetzte Bisdiazoniumverbindung durch eine äquimolare Menge der Bisdiazoniumverbindung aus den Beispielen 16 -21 und verwendet man die in der folgenden Tabelle angegebenen Basen und Kupplungskomponenten, so erhält man stabile, konzentrierte Lösungen von Farbstoffen, die Baumwolle und Papier in den angegebenen Farbtönen anfärben.

| Bsp. | Base | Kupplungskomponente | Farbton | $\lambda_{max}$ |
|---|---|---|---|---|
| 23 | $B_1$ | 3-Aminophenylglycin | schwarz | 602 nm |
| 24 | $B_2$ | 5-Aminonaphthalin-2-sulfonsäure | dunkelblau | 592 nm |
| 24 | $B_3$ | 2,6-Dihydroxy-4-methylpyridin | dunkelgrün | 582 nm |

Beispiel 25 - 28

Verwendet man statt der in Beispiel 1 eingesetzten Verbindung der Formel A dieselbe Menge der Verbindung der Formel C und als Kupplungskomponenten die in der folgenden Tabelle angegebenen Verbindungen, so erhält man Farbstoffe, die Baumwolle, Papier und Leder in den angebebenen Farbtönen anfärben.

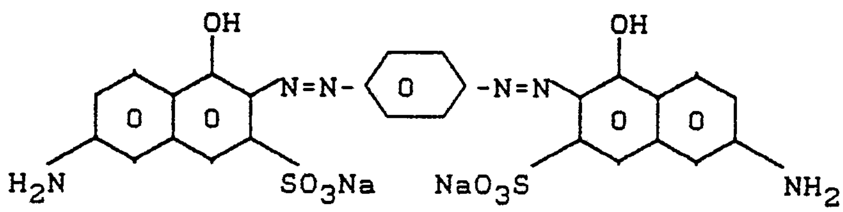

(C)

| Bsp. | Kupplungskomponente | Farbton | $\lambda_{max}$ |
|---|---|---|---|
| 25 | 1,3-Diaminobenzol | dunkelblau | |
| 26 | 3-Hydroxyphenyl harnstoff | blaugrau | |
| 27 | 4-Hydroxynaphthalin-1-sulfonsäure | blau | 590 nm |
| 28 | Acetessigsäureanilid | flaschen-grün | |

Beispiel 29 -31

Ersetzt man die in den Beispielen 7 -11 eingesetzte Bisdiazoniumverbindung durch eine äquimolare Menge der Bisdiazoniumverbindung aus den Beispielen 25 -28 und verwendet man die in der folgenden Tabelle angegebenen Basen und Kupplungskomponenten, so erhält man stabile, konzentrierte Lösungen von Farbstoffen, die Baumwolle und Papier in den angegebenen Farbtönen anfärben.

| Bsp. | Base | Kupplungskomponente | Farbton |
|---|---|---|---|
| 29 | $B_3$ | 3-Aminophenylglycin | dunkelblau |
| 30 | $B_3$ | 4-Aminonaphthalin-1-sulfonsäure | blau |
| 31 | $B_2$ | Citrazinsäure | dunkelgrün |

Beispiele 32 - 47

Verwendet man statt der in Beispiel 1 eingesetzten Verbindung der Formel A eine äquimolare Menge der Verbindung der Formel D, E, F oder G und als Kupplungskomponenten die in den folgenden Tabellen angegebenen Verbindungen, so erhält man Farbstoffe, die Baumwolle, Papier und Leder in den angegebenen Tönen anfärben.

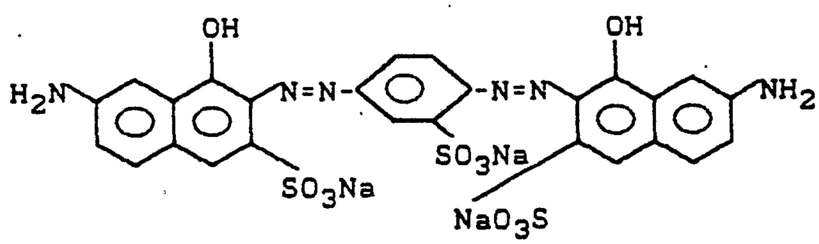

(D)

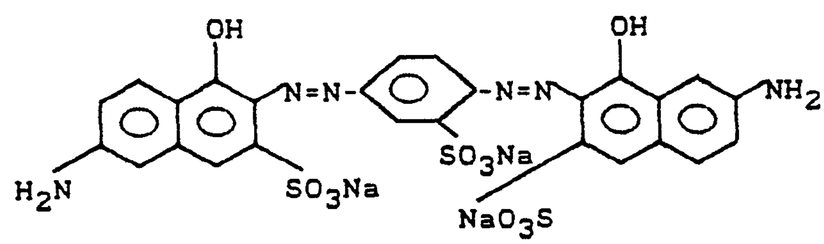

(E)

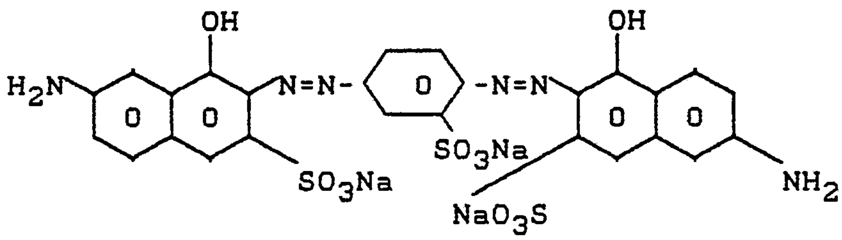

(F)

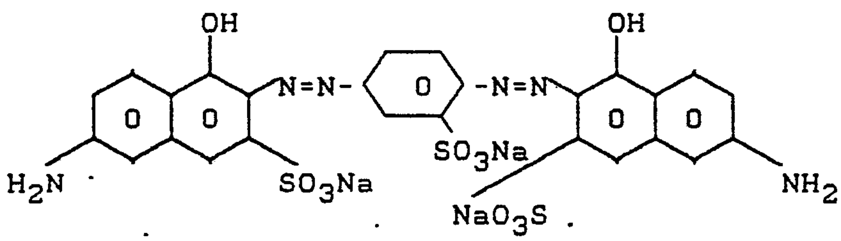

(G)

Bisdiazoniumverbindungen aus der Verbindung der Formel D:

| Bsp. | Kupplungskomponente | Farbton | $\lambda_{max}$ |
|---|---|---|---|
| 32 | 1,3-Diaminobenzol | schwarz | 464 nm |
| 33 | 3-Aminophenylglycin | schwarz | 632 nm |
| 34 | 2-Hydroxynaphthalin | dunkelblau | |
| 35 | 3-Methylpyrazol-5-on | grün | 598 nm |

Bisdiazoniumverbindung aus der Verbindung der Formel E

| Bsp. | Kupplungskomponente | Farbton | $\lambda_{max}$ |
|---|---|---|---|
| 36 | 3-Aminophenol | blaugrau | |
| 37 | 3-Aminophenylharnstoff | schwarz | 654 nm |
| 38 | 6-Hydroxynaphthalin-2-sulfonsäure | dunkelblau | |
| 39 | Acetessigsäure-o-anisidid | dunkelgrün | |

Bisdiazoniumverbindungen aus der Verbindung der Formel F

| | | | |
|---|---|---|---|
| 40 | 1,3-Diaminobenzol | schwarz | 632 nm |
| 41 | 3-Hydroxyphenylglycin | blaugrau | 604 nm |
| 42 | 2-Hydroxynaphthalin | blau | |
| 43 | 2,6-Dihydroxy-4-methylpyridin | graugrün | |

Bisdiazoniumverbindung aus der Verbindung der Formel G

| | | | |
|---|---|---|---|
| 44 | N-3-Aminophenylacetamid | dunkelblau | |
| 45 | M-3-Aminophenylglykolsäureamid | dunkelblau | |
| 46 | 4-Hydroxynaphthalin-1-sulfonsäure | blau | |
| 47 | 6-Hydroxy-1,4-dimethyl-1H-pyridin-2-on | grün | |

Beispiel 48 -63

Verwendet man statt der in Beispiel 1 eingesetzten Verbindung der Formel A eine äquimolare Menge der Verbindung der Formel H, T, K oder L und als Kupplungskomponenten die in der folgenden Tabelle angegebenen Verbindungen, so erhält man Farbstoffe, die Baumwolle, Papier und Leder in den angegebenen Tönen anfärben.

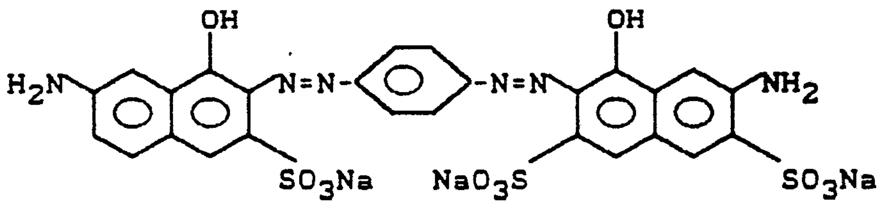

(H)

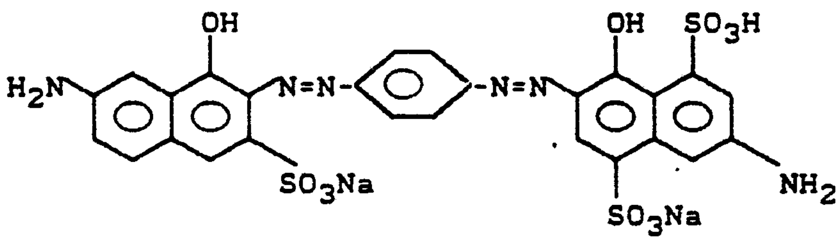

(J)

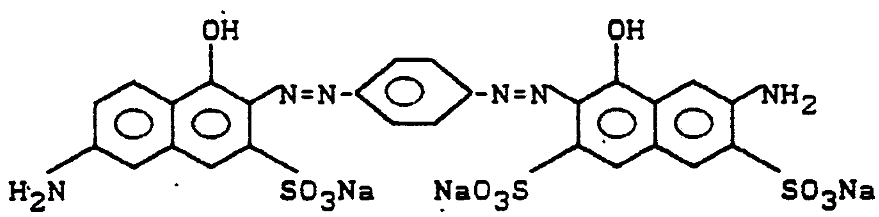

(K)

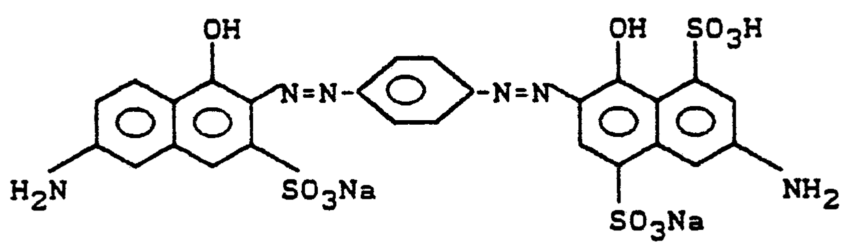

(L)

| Bsp. | Kupplungskomponente | Farbton |
|---|---|---|
| Bisdiazoniumverbindung aus der Verbindung der Formel H | | |
| 48 | 1,3-Diaminobenzol | schwarz |
| 49 | Resorcin | grün |
| 50 | 2-Hydroxynaphthalin | blau |
| 51 | Barbitursäure | grün |

Bisdiazoniumverbindungen aus der Verbindung der Formel J

| Bsp. | Kupplungskomponente | Farbton | $\lambda_{max}$ |
|---|---|---|---|
| 52 | 3-Aminophenylglycin | schwarz | 646 nm |
| 53 | 3-Aminophenylharnstoff | schwarz | |
| 54 | 3-Hydroxynaphthalin-1-sulfonsäure | dunkelblau | 626 nm |
| 55 | Acetessigsäureanilid | dunkelgrün | 602 nm |

Bisdiazoniumverbindungen aus der Verbindung der Formel K

| | | | |
|---|---|---|---|
| 56 | 3-Aminophenol | grau | |
| 57 | N-3-Aminophenylacetamid | blauschwarz | |
| 58 | 2-Hydroxynaphthalin | dunkelblau | |
| 59 | 2,9-Dihydroxy-4-methyl-pyridin | graugrün | |

Bisdiazoniumverbindung aus der Verbindung der Formel L

| | | | |
|---|---|---|---|
| 60 | 1,3-Diaminobenzol | dunkelblau | |
| 61 | 3-Hydroxyphenylharnstoff | blaugrau | 602 nm |
| 62 | 4-Hydroxynaphthalin-2-sulfonsäure | blau | 592 nm |
| 63 | 3-Methylpyrazol-5-on | dunkelgrün | 598 nm |

**Ansprüche**

1. Farbstoffe, die in Form der freien Säure der allgemeinen Formel

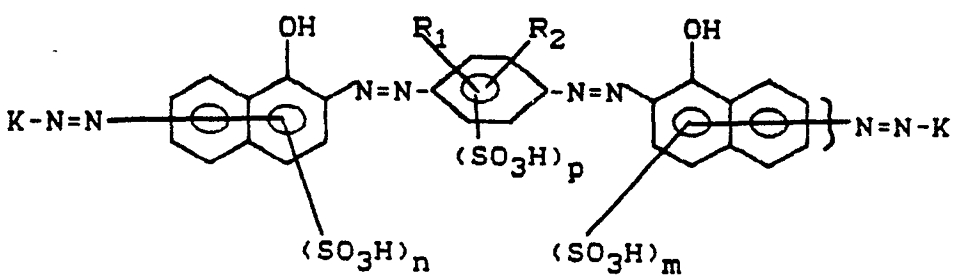

entsprechen, worin

K = Rest einer phenolischen oder enolischen Kupplungskomponente

$R_1$ und $R_2$ = H, Cl, $CH_3$, $OCH_3$, COOH,

n, m und p = 0 -2.

2. Farbstoffe des Anspruchs 1 der allgemeinen Formel

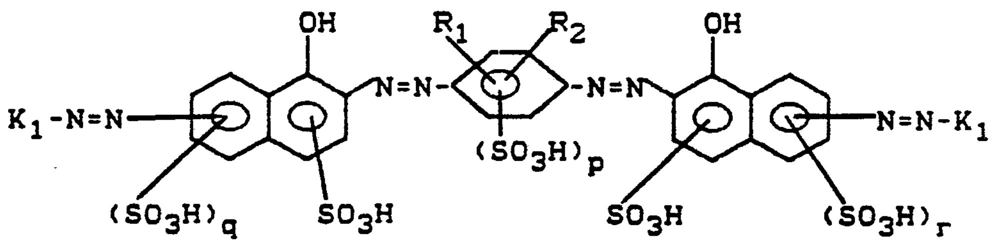

worin

$K_1$ = Rest einer Kupplungskomponente der Hydroxylbenzol-, Aminobenzol-, Aminohydroxylbenzol-, Hydroxynaphthalin-, Aminonaphthalin-, Pyrazolon-, Pyridin-, Pyrimidin- oder Acetessigarylidreihe mit jeweils höchstens einer Sulfogruppe,

q und r = 0 oder1.

3. Farbstoffe des Anspruchs 1 der allgemeinen Formel

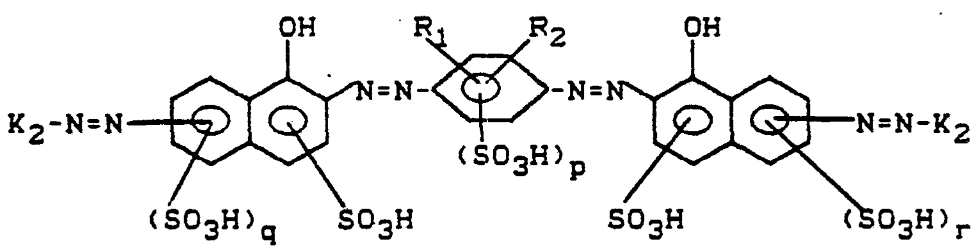

worin

$K_2$ = Rest der Formel

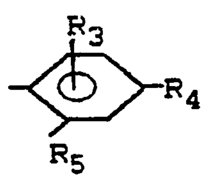

o oder p

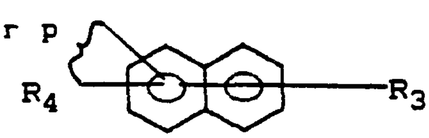

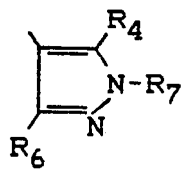

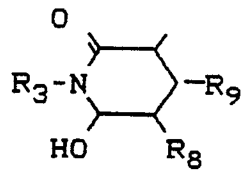

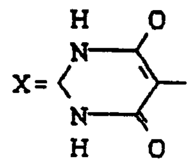

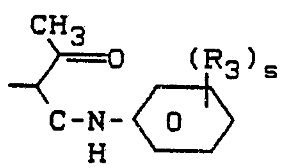

worin

$R_3$ = H, Cl, $CH_3$, $OCH_3$, COOH, $SO_3H$

$R_4$ = OH, $NH_2$,

$R_5$ -OH, $NH_2$, $NHCH_2COOH$, $NHCONH_2$, $NHCOCH_3$, $NHCOCH_2OH$

$R_6$ = H, $CH_3$, COOH, $COOCH_3$, $COOC_2H_5$,

$R_7$ = H, Phenyl, 2-, 3-oder 4-Sulfophenyl,

$R_8$ = H, CN, $CONH_2$, COOH, $SO_3H$,

$R_9$ = H, $CH_3$,

X = O, S. NH, NCN

s = 1 oder 2

$R_1$ = H, Cl, $CH_3$, $OCH_3$, COOH,

p = 0-2 und

q und r = 0 oder 1

und die Gesamtzahl der $SO_3H$-Reste 2-6 beträgt.

4. Farbstoffe des Anspruchs 1 der allgemeinen Formel

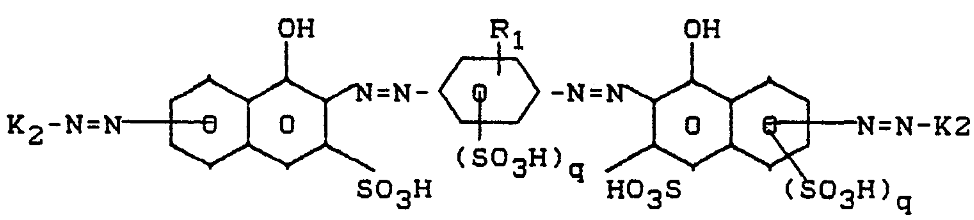

worin

$K_2$ = Rest der Formel

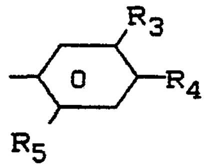

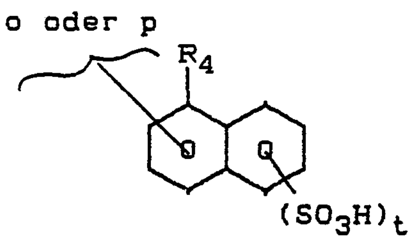 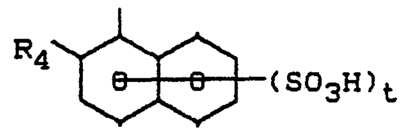

oder

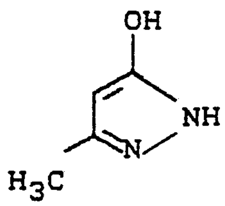 , 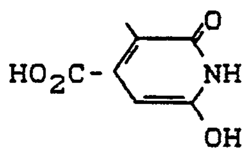 , 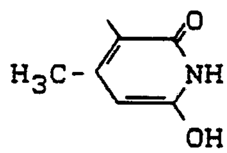 , 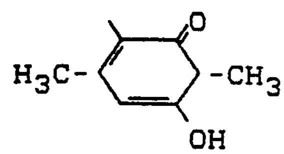

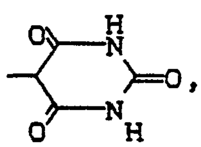 , 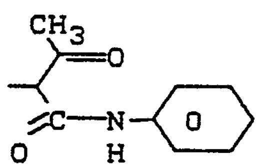 , 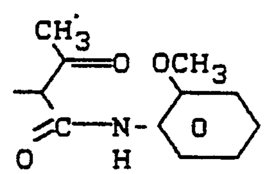

worin t, q = 0 oder 1.

5. Verwendung der Farbstoffe der Ansprüche 1-4 zum Färben cellulosehaltiger Materialien und Leder.